(19) Europäisches Patentamt
European Patent Office
Office européen des brevets

(11) **EP 2 099 556 B1**

(12) **FASCICULE DE BREVET EUROPEEN**

(45) Date de publication et mention
de la délivrance du brevet:
**09.06.2021 Bulletin 2021/23**

(51) Int Cl.:
***G01J 5/52*** *(2006.01)*  ***G01J 5/04*** *(2006.01)*
***B01J 8/06*** *(2006.01)*

(21) Numéro de dépôt: **07866509.8**

(22) Date de dépôt: **29.10.2007**

(86) Numéro de dépôt international:
**PCT/FR2007/052266**

(87) Numéro de publication internationale:
**WO 2008/068434 (12.06.2008 Gazette 2008/24)**

(54) **PROCEDE DE CONTROLE D'UNE REACTION DE REFORMAGE PAR MESURE DE LA TEMPERATURE DES TUBES DE REFORMAGE ET MODIFICATION DES PARAMETRES OPERATOIRES**

VERFAHREN ZUR STEUERUNG EINER REFORMIERUNGSREAKTION DURCH MESSUNG DER TEMPERATUR DER REFORMIERUNGSROHRE UND MODIFIZIERUNG VON BETRIEBSPARAMETERN

METHOD FOR CONTROLLING A REFORMING REACTION BY MEASUREMENT OF THE TEMPERATURE OF THE REFORMING TUBES AND FUNCTIONAL PARAMETER MODIFICATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.12.2006 FR 0655308**

(43) Date de publication de la demande:
**16.09.2009 Bulletin 2009/38**

(73) Titulaire: **L'AIR LIQUIDE, Société Anonyme pour l'Etude
et l'Exploitation des Procédés Georges Claude
75007 Paris (FR)**

(72) Inventeurs:
• **AMMOURI, Fouad
  91300 Massy (FR)**
• **GALLARDA, Jean
  94340 Joinville Le Pont (FR)**

(74) Mandataire: **Air Liquide
L'Air Liquide S.A.
Direction de la Propriété Intellectuelle
75, Quai d'Orsay
75321 Paris Cedex 07 (FR)**

(56) Documents cités:
**EP-A- 1 136 444  EP-A1- 1 094 031
EP-A2- 1 216 955  FR-A1- 2 850 392
GB-A- 1 247 338  US-A- 3 656 913**

EP 2 099 556 B1

**Description**

La présente invention concerne un procédé de contrôle d'un procédé de reformage à la vapeur d'hydrocarbures pour l'obtention d'un gaz de synthèse.

Un procédé de reformage à la vapeur d'hydrocarbures est mis en œuvre dans une chambre de combustion d'un four de reformage comprenant des brûleurs et des tubes remplis de catalyseurs et aptes à être traversés par un mélange d'hydrocarbures et de vapeur. Les brûleurs sont disposés de manière à transférer la chaleur de leur combustion au mélange d'hydrocarbures et de vapeur à travers la paroi des tubes, généralement par radiation de la chaleur de la flamme sur les parois réfractaires de la chambre de combustion.

Des fours de reformage comprenant des brûleurs et des tubes remplis de fluides à réchauffer sont connus à partir des documents de brevet EP 1 216 955 A2, US 3,656,913 ou GB 1 247 338. Les tubes de reformeur présentent habituellement une durée de vie d'environ 100 000 heures dans les conditions normales d'utilisation.

Des températures plus élevées que prévues réduisent la durée de vie des tubes : ainsi, la durée de vie peut être divisée par 2 si le tube est utilisé à une température de 10 à 20°C de plus que sa température de design ou DTT (c'est à dire Design Temperature of the Tube),

Toutefois, des températures élevées sont toujours souhaitables pour augmenter le rendement de production en gaz de synthèse.

Il est par conséquent nécessaire de contrôler le procédé mis en œuvre dans le four de manière à mettre en œuvre une température élevée permettant un rendement élevé en gaz de synthèse tout en s'assurant que cette température ne réduit pas la durée de vie des tubes de reformage. On considère la température DTT-15°C comme la température maximale à laquelle le four de reformage peut être utilisé sans risque, cette température maximale d'opération est aussi appelée MOT (ou Maximum Operating Temperature).

Le but de la présente invention est de proposer un tel procédé de contrôle.

Dans ce but, l'invention concerne un procédé de contrôle d'un procédé de reformage à la vapeur d'hydrocarbures mis en œuvre dans une chambre de combustion comprenant des brûleurs et des tubes, lesdits tubes étant remplis de catalyseur et étant aptes à être traversés par un mélange d'hydrocarbures et de vapeur, les brûleurs étant disposés de manière à transférer la chaleur de leur combustion au mélange d'hydrocarbures et de vapeur à travers la paroi des tubes, procédé selon lequel on mesure la température de paroi T de chaque tube, de préférence dans la partie aval du tube, et si pour au moins un tube, la température mesurée T est supérieure ou égale à la MOT, alors on modifie au moins un paramètre opératoire du reformage de manière à abaisser la température mesurée T de ce tube à une valeur inférieure à la MOT.

L'invention comprend donc une étape de mesure de la température de la paroi T de chaque tube dans la partie aval dudit tube. Par partie aval, on entend la moitié du tube située en aval selon le sens de circulation du mélange d'hydrocarbures et de vapeur dans le tube. Chaque tube présente une température de design DTT spécifique à la nature de sa composition métallique et sa géométrie. Cette température est définie par le fabricant de tubes. Selon l'invention, on mesure la température T pour chaque tube et on la compare à la température de design DTT de ce tube. Si la température mesurée T est inférieure à la MOT, aucune action de contrôle de la réaction de reformage n'est nécessaire. Par contre, si pour au moins un tube, la température T mesurée pour ce tube est supérieure ou égale à la MOT, alors, dans une seconde étape, on modifie des paramètres opératoires de la réaction de reformage de manière à abaisser la température du reformage, et donc la température mesurée T de ce tube, jusqu'à une valeur inférieure à la MOT..

Selon le procédé de l'invention, les étapes de mesure de la température de paroi T de chaque tube et de modification éventuelle du au moins un paramètre opératoire sont réalisées au moins une fois par mois.

De préférence, cette mesure est également réalisée lors des démarrages de l'installation de reformage et pendant les tests de production.

Afin d'assurer la sécurité des tubes entre deux mesures de la température T de l'ensemble des tubes telles que décrite ci-dessus, l'invention peut comprendre en outre tout ou partie des opérations suivantes :

- lors de chaque mesure de la température T pour l'ensemble des tubes, on identifie les tubes dits « très chauds » (very hot tube), il s'agit des tubes dont la température mesurée T est supérieure ou égale à MOT - 10°C. Si pour au moins un des tubes la température mesurée T est supérieure ou égale à MOT - 10°C, alors la température de ce au moins un tube identifié est mesurée plus fréquemment, et de préférence tous les jours. Il est clair que la température limite MOT -10°C retenue pour assurer cette surveillance accrue peut être adaptée par l'homme du métier qui aurait à tenir compte de conditions particulières.

- lors de chaque mesure de la température T pour l'ensemble des tubes, on identifie les 25 % de tubes les plus chauds, même si ces tubes ne sont pas des tubes « très chauds » selon l'invention, de sorte que en cas de modification des paramètres opératoires du procédé de reformage ayant pour conséquence une augmentation significative de la température des tubes, on mesure la température de ces 25% de tubes les plus chauds. Si pour au moins un tube, la température mesurée T est supérieure ou égale à MOT - 10°C, alors la température de ce au moins un tube, identifié alors comme « tube très chaud » est mesurée plus fréquemment, et de préférence tous les jours.

Parmi les facteurs pouvant conduire à une augmentation significative de la température des tubes, on peut citer par exemple, une 'augmentation de la charge alimentant le four de reformage de 5 à 10%, l'augmentation de la température de sortie du gaz de synthèse généré dans les tubes de 5 à 10°C, l'arrêt du recyclage du $CO_2$ ou la modification de la configuration des brûleurs.

Pour abaisser la température des tubes, on modifie préférentiellement au moins un paramètre opératoire choisi parmi : le débit du mélange hydrocarbures et vapeur, le rapport entre les quantités d'hydrocarbures et de vapeur, les débits de comburant et/ou de combustible dans les brûleurs, la pression du comburant et/ou du combustible dans les brûleurs, le pourcentage d'oxygène dans le comburant; on choisira avantageusement de modifier les débits de combustible et/ou de comburant des brûleurs.

De préférence, on mesure la température de paroi T des tubes au moyen d'un pyromètre. On peut également utiliser un thermocouple de contact ou une caméra infrarouge. Les mesures pyrométriques s'effectuent par l'intermédiaire d'ouvertures percées dans la paroi du four ("peephole" en anglais) à travers lesquelles un opérateur pointe un pyromètre (ou un autre instrument de mesure) sur le tube dont la température de paroi T doit être mesurée. Le pyromètre est tenu horizontalement lors de la mesure. Pour un pyromètre, selon une première variante, il est possible de prendre comme température de paroi T du tube la valeur Tm indiquée par le pyromètre lorsqu'on le dirige directement vers la paroi du tube. Selon une seconde variante, pour un pyromètre, la température de paroi T du tube est déduite, d'une part, de la valeur Tm indiquée par le pyromètre pointé à partir d'un « peephole » situé sur une paroi de la chambre de combustion (première paroi), et dirigé directement vers le tube et, d'autre part, de la température moyenne Tw de cette même paroi, à proximité du tube à partir de la formule :

$$T \text{ (Kelvin)} = 14388 \; / \; (\lambda \, \ln\,[1 + \cfrac{\varepsilon}{\cfrac{1}{e^{14388/\lambda Tm}-1} - \cfrac{(1-\varepsilon)}{e^{14388/\lambda Tw}-1}}])$$

dans laquelle :

- T est la température en Kelvin,
- $\lambda$ est la longueur d'onde du pyromètre en $\mu$m,
- Tm est la température indiquée par le pyromètre lorsqu'il est directement dirigé vers le tube, en Kelvin
- Tw, en Kelvin, est la moyenne de six mesures de la température relevées sur la (première) paroi de la chambre de combustion de part et d'autre du tube,
- $\varepsilon$ est l'émissivité du tube.

Selon cette deuxième variante, il faut donc réaliser à l'aide du pyromètre six mesures de température sur la paroi de la chambre de combustion à partir de laquelle la mesure Tm de température du tube a été faite (soit la première paroi). Ces six mesures sont réalisées en pointant le pyromètre à partir de la seconde paroi de la chambre vers la première paroi de la chambre de combustion ..

- trois mesures sont réalisées à droite du tube :

  • une première mesure à la hauteur du point du tube où la mesure Tm a été faite,
  • la deuxième mesure au-dessus et à la verticale de la première mesure, et
  • la troisième mesure en-dessous et à la verticale de la première mesure,

- trois mesures sont réalisées à gauche du tube :

  • une première mesure à la hauteur du point du tube où la mesure Tm a été faite,
  • la deuxième mesure au-dessus et à la verticale de la première mesure, et
  • la troisième mesure en-dessous et à la verticale de la première mesure.

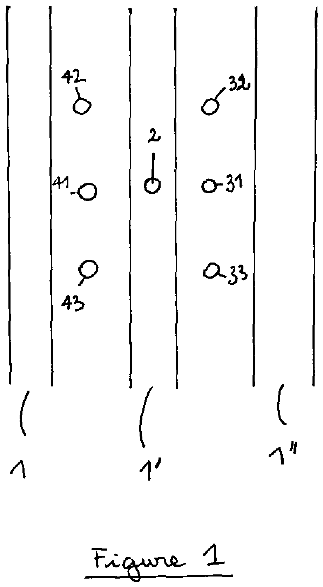

Afin d'illustrer l'emplacement de ces six mesures, la figure 1 représente 3 tubes de reformage 1, 1' et 1''. La température Tm est mesurée au point 2 situé sur le tube 1' par pointage direct du pyromètre sur ce tube. Pour obtenir Tw, six mesures sont réalisées sur la paroi de la chambre de combustion (située derrière le tube 1' lors de la mesure de la température de la paroi de la chambre): 3 à droite du tube 1' (31, 32, et 33) et 3 à gauche du tube (41, 42, 43).

L'émissivité ε du tube peut être fournie par le fabricant de tube ou mesurée en laboratoire sur un échantillon de tube.

Les mesures selon la seconde variante sont particulièrement utiles pour mesurer la température de paroi des tubes situés en biais par rapport aux ouvertures percées dans la paroi du four ("peepholes"), car, ne se trouvant pas en face des ouvertures, ces tubes ne subissent pas le phénomène de refroidissement dû à l'ouverture du « peephole ».

Ce type de mesure est également préférable pour les tubes dits « très chauds », c'est à dire tous les tubes qui ont déjà présenté une température de paroi T supérieure ou égale à MOT - 10°C, ainsi que pour tous les tubes qui font partie des 25 % de tubes présentant les températures les plus élevées.

Cette méthode de mesure peut être appliquée sur tout type de four de reformage.

La présente invention présente l'avantage de limiter le vieillissement des tubes de reformage. Un autre avantage est qu'elle permet de mieux contrôler la puissance dans les différents brûleurs et d'assurer une production optimale de gaz de synthèse issu de la réaction de reformage.

## Revendications

1. Procédé de contrôle d'un procédé de reformage à la vapeur d'hydrocarbures mis en œuvre dans une chambre de combustion comprenant des brûleurs et des tubes, lesdits tubes étant remplis de catalyseurs et étant aptes à être traversés par un mélange d'hydrocarbures et de vapeur, les brûleurs étant disposés de manière à transférer la chaleur de leur combustion au mélange d'hydrocarbures et de vapeur à travers la paroi des tubes, dans lequel on mesure la température de paroi T de chaque tube, de préférence dans la partie aval du tube, **caractérisé en ce que** :

   - les étapes de mesure de la température de paroi T de chaque tube sont réalisées au moins une fois par mois,
   - après avoir mesuré la température T de chaque tube, on identifie les tubes dits « très chauds » c'est-à-dire ceux dont la température mesurée T est supérieure ou égale à MOT - 10°C, et si pour au moins un tube, la température mesurée T est supérieure ou égale à MOT - 10°C, alors la température de ce au moins un tube identifié est mesurée plus fréquemment, et de préférence tous les jours, et
   - lorsque pour au moins un tube, la température mesurée T est supérieure ou égale à la MOT, on modifie au moins un paramètre opératoire du procédé de reformage de manière à abaisser la température mesurée T de ce tube à une valeur inférieure à la MOT, où la MOT est la température optimale d'opération des tubes, égale à DTT - 15°C, DTT étant la température de design du tube.

2. Procédé selon la revendications 1 **caractérisé en ce qu'**après avoir mesuré la température T de chaque tube, on identifie les 25 % de tubes les plus chauds, de sorte que en cas de modification des paramètres opératoires du procédé de reformage ayant pour conséquence une augmentation significative de la température des tubes, on mesure la température de ces 25% des tubes les plus chauds, et si pour au moins un tube, la température mesurée T est supérieure ou égale à MOT - 10°C, alors la température de ce au moins un tube est mesurée plus fréquemment, et de préférence tous les jours.

3. Procédé selon la revendications 1 ou 2, **caractérisée en ce que** pour abaisser la température des tubes, on modifie préférentiellement au moins un paramètre opératoire choisi parmi le débit du mélange d'hydrocarbures et vapeur, le rapport entre les quantités d'hydrocarbures et de vapeur, les débits de comburant et/ou de combustible dans les brûleurs, la pression du comburant et/ou du combustible dans les brûleurs, le pourcentage d'oxygène dans le comburant; on modifie plus préférentiellement les débits de combustible et/ou de comburant des brûleurs.

4. Procédé selon l'une des revendications précédentes, **caractérisé en ce que** la température de paroi T du tube est la valeur Tm indiquée par un pyromètre lorsqu'on le dirige directement vers la paroi du tube.

5. Procédé selon l'une des revendications 1 à 3 **caractérisé en ce que** la température de paroi T du tube est déduite de la valeur Tm indiquée par un pyromètre lorsqu'on le dirige directement vers le tube et de la température moyenne Tw de la paroi de la chambre de combustion à proximité du tube à partir de la formule :

$$T \text{ (Kelvin)} = 14388 / \left( \lambda \ln \left[ \, 1 + \frac{\varepsilon}{\dfrac{1}{e^{14388/\lambda Tm} - 1} - \dfrac{(1-\varepsilon)}{e^{14388/\lambda Tw} - 1}} \, \right] \right)$$

dans laquelle :

- T est la température en Kelvin,
- λ est la longueur d'onde du pyromètre en μm,
- Tm est la température indiquée par le pyromètre lorsqu'il est directement dirigé vers le tube, en Kelvin
- Tw, en Kelvin, est la moyenne de six mesures de température faites sur la paroi de la chambre de combustion de part et d'autre du tube,
- ε est l'émissivité du tube.

**6.** Procédé selon la revendication précédente, **caractérisé en ce que** les six mesures de température faites sur la paroi de la chambre de combustion de part et d'autre du tube sont réalisées en pointant le pyromètre sur la paroi située derrière le tube (1') :

- trois mesures sont réalisées à droite du tube (1') :

  . une première mesure (31) à la hauteur du point du tube où la mesure Tm a été faite,
  . la deuxième mesure (32) au-dessus et à la verticale de la première mesure, et
  . la troisième mesure (33) en dessous et à la verticale de la première mesure,

- trois mesures sont réalisées à gauche du tube (1') :

  . une première mesure (41) à la hauteur du point du tube où la mesure Tm a été faite,
  . la deuxième mesure au-dessus (42) et à la verticale de la première mesure, et
  . la troisième mesure en dessous (43) et à la verticale de la première mesure.

## Patentansprüche

**1.** Verfahren zur Steuerung eines Reformierungsverfahrens mit Kohlenwasserstoffdampf, das in einer Brennkammer mit Brennern und Rohren durchgeführt wird, wobei die Rohre mit Katalysatoren gefüllt sind und von einer Mischung aus Kohlenwasserstoffen und Dampf durchströmbar sind, wobei die Brenner derart angeordnet sind, dass sie die Verbrennungswärme auf die Mischung aus Kohlenwasserstoffen und Dampf durch die Wand der Rohre übertragen, wobei die Wandtemperatur T von jedem Rohr gemessen wird, vorzugsweise im stromabwärtigen Bereich des Rohrs, **dadurch gekennzeichnet, dass**:

- die Schritte zum Messen der Wandtemperatur T von jedem Rohr mindestens einmal pro Monat durchgeführt werden,
- nach dem Messen der Temperatur T von jedem Rohr die sogenannten "sehr heißen" Rohre ermittelt werden, das heißt die, deren Messtemperatur T größer gleich MOT - 10°C beträgt, und wenn bei mindestens einem Rohr die Messtemperatur T größer gleich MOT - 10°C beträgt, die Temperatur von diesem mindestens einen ermittelten Rohr häufiger und vorzugsweise täglich gemessen wird, und
- wenn bei mindestens einem Rohr die Messtemperatur T größer gleich der MOT ist, mindestens ein Betriebsparameter des Reformierungsverfahrens derart modifiziert wird, dass die Messtemperatur T dieses Rohrs auf einen Wert unter der MOT, wobei die MOT die optimale Einsatztemperatur der Rohre ist, gesenkt wird, der der DTT - 15°C entspricht, wobei DTT die Auslegungstemperatur des Rohrs ist.

**2.** Verfahren nach Anspruch 1, **dadurch gekennzeichnet, dass** nach dem Messen der Temperatur T jedes Rohrs die heißesten 25 % der Rohre ermittelt werden, sodass beim Modifizieren der Betriebsparameter des Reformierungsverfahrens, wodurch sich eine beträchtliche Erhöhung der Temperatur der Rohre ergibt, die Temperatur dieser heißesten 25% der Rohre gemessen wird, und wenn bei mindestens einem Rohr die Messtemperatur T größer gleich MOT - 10°C beträgt, die Temperatur dieses mindestens einen Rohrs häufiger und vorzugsweise täglich gemessen wird.

**3.** Verfahren nach Anspruch 1 oder 2, **dadurch gekennzeichnet, dass** zum Senken der Temperatur der Rohre vorteilhafterweise mindestens ein Betriebsparameter modifiziert wird, der ausgewählt wird aus dem Durchfluss der Mischung aus Kohlenwasserstoffen und Dampf, dem Verhältnis zwischen den Mengen an Kohlenwasserstoffen und Dampf, dem Durchfluss von einem die Verbrennung bewirkenden Mittel und/oder von Brennstoff in den Brennern, dem Druck von dem die Verbrennung bewirkenden Mittel und/oder von Brennstoff in den Brennern, dem Prozentsatz an Sauerstoff in dem die Verbrennung bewirkenden Mittel; bevorzugter der Durchfluss von dem Brennstoff und/oder dem die Verbrennung bewirkenden Mittel der Brenner modifiziert wird.

**4.** Verfahren nach einem der vorhergehenden Ansprüche, **dadurch gekennzeichnet, dass** die Wandtemperatur T des Rohrs der Wert Tm ist, der von einem Pyrometer angezeigt wird, wenn es direkt auf die Wand des Rohrs gerichtet wird.

**5.** Verfahren nach einem der Ansprüche 1 bis 3, **dadurch gekennzeichnet, dass** die Wandtemperatur T des Rohrs von dem Wert Tm, der von einem Pyrometer angezeigt wird, wenn es direkt auf das Rohr gerichtet wird, und von der mittleren Wandtemperatur Tw der Brennkammer in der Nähe des Rohrs aus der Formel abgeleitet wird:

$$T(Kelvin) = 14388 / (\lambda \ln[e^{14388/\lambda Tm} - 1 \quad 1 + \frac{\varepsilon}{\dfrac{1}{} - \dfrac{(1-\varepsilon)}{e^{14388/\lambda Tw} - 1}}])$$

in der:

- T die Temperatur in Kelvin ist,
- $\lambda$ die Wellenlänge des Pyrometers in $\mu$m ist,
- Tm die Temperatur, die von dem Pyrometer angezeigt wird, wenn es direkt auf das Rohr gerichtet wird, in Kelvin ist,
- Tw, in Kelvin, der Durchschnitt aus sechs Temperaturmessungen ist, die an der Wand der Brennkammer auf beiden Seiten des Rohrs durchgeführt werden,
- $\varepsilon$ der Emissionsgrad des Rohrs ist.

**6.** Verfahren nach dem vorhergehenden Anspruch, **dadurch gekennzeichnet, dass** die sechs Temperaturmessungen an der Wand der Brennkammer auf beiden Seiten des Rohrs durchgeführt werden, indem das Pyrometer Richtung der Wand hinter dem Rohr (1') gehalten wird:

- drei Messungen erfolgen rechts vom Rohr (1'):

  • eine erste Messung (31) auf Höhe der Stelle des Rohrs, wo die Messung von Tm erfolgt ist,
  • die zweite Messung (32) über der und vertikal zur ersten Messung, und
  • die dritte Messung (33) unter der und vertikal zur ersten Messung,

- drei Messungen erfolgen links vom Rohr (1'):

  • eine erste Messung (41) auf Höhe der Stelle des Rohrs, wo die Messung von Tm erfolgt ist,
  • die zweite Messung (42) über der und vertikal zur ersten Messung, und
  • die dritte Messung (43) unter der und vertikal zur ersten Messung.

**Claims**

**1.** Method for controlling a hydrocarbon steam reforming process carried out in a combustion chamber comprising burners and tubes, said tubes being filled with catalysts and being capable of being passed through by a mixture of hydrocarbons and steam, the burners being positioned so as to transfer the heat from their combustion to the mixture of hydrocarbons and steam through the wall of the tubes, in which the wall temperature T of each tube is measured, preferably in the downstream part of the tube, **characterized in that**

- the steps of measuring the wall temperature T of each tube are carried out at least once a month,
- after having measured the temperature T of each tube, the tubes that are said to be "very hot" are identified, that is to say those for which the temperature measured T is greater than or equal to MOT-10°C, and if, for at least one tube, the temperature measured T is greater than or equal to MOT-10°C, then the temperature of this at least one identified tube is measured more frequently and preferably every day, and
- when, for at least one tube, the temperature measured T is greater than or equal to the MOT, at least one operating parameter of the reforming process is modified so as to lower the temperature measured T of this tube to a value below the MOT, where the MOT is the maximum operating temperature of the tubes, equal to DTT-15°C, DTT being the design temperature of the tube.

**2.** Method according to Claim 1, **characterized in that**, after having measured the temperature T of each tube, the hottest 25% of the tubes are identified so that, in the case of a modification of the operating parameters of the reforming process that results in a significant increase in the temperature of the tubes, the temperature of these hottest 25% of the tubes is measured, and if, for at least one tube, the temperature measured T is greater than or equal to MOT-10°C, then the temperature of this at least one tube is measured more frequently and preferably every day.

**3.** Method according to Claim 1 or 2, **characterized in that**, in order to lower the temperature of the tubes, preferably at least one operating parameter is modified, this operating parameter being chosen from the flow rate of the mixture of hydrocarbons and steam, the ratio between the amounts of hydrocarbons and steam, the flow rates of oxidant and/or of fuel in the burners, the pressure of the oxidant and/or of the fuel in the burners, and the percentage of oxygen in the oxidant; more preferably the flow rates of fuel and/or of oxidant of the burners are modified.

**4.** Method according to one of the preceding claims, **characterized in that** the wall temperature T of the tube is the value Tm indicated by a pyrometer when it is aimed directly at the wall of the tube.

**5.** Method according to one of Claims 1 to 3, **characterized in that** the wall temperature T of the tube is deduced from the value Tm indicated by a pyrometer when it is aimed directly at the tube and from the average temperature Tw of the wall of the combustion chamber in the vicinity of the tube from the formula:

$$T \text{ (Kelvin)} = 14388 \ / \ \left( \lambda \ \ln \left[ 1 + \cfrac{\varepsilon}{\cfrac{1}{e^{14388/\lambda Tm}-1} - \cfrac{(1-\varepsilon)}{e^{14388/\lambda Tw}-1}} \right] \right)$$

in which:

- T is the temperature in Kelvin;
- $\lambda$ is the wavelength of the pyrometer in $\mu$m;
- Tm is the temperature indicated by the pyrometer when it is aimed directly at the tube, in Kelvin;
- Tw, in Kelvin, is the average of six temperature measurements taken from the wall of the combustion chamber on both sides of the tube; and
- $\varepsilon$ is the emissivity of the tube.

**6.** Method according to the preceding claim, **characterized in that** the six temperature measurements taken from the wall of the combustion chamber on both sides of the tube are carried out by pointing the pyrometer at the wall located behind the tube (1'):

- three measurements were carried out to the right of the tube (1'):

  • a first measurement (31) at the height of the point of the tube where the measurement Tm was taken;
  • the second measurement (32) above and in a vertical line with the first measurement; and
  • the third measurement (33) below and in a vertical line with the first measurement;

- three measurements were carried out to the left of the tube (1'):

  • a first measurement (41) at the height of the point of the tube where the measurement Tm was taken;
  • the second measurement (42) above and in a vertical line with the first measurement; and
  • the third measurement (43) below and in a vertical line with the first measurement.

Figure 1

**EP 2 099 556 B1**

## RÉFÉRENCES CITÉES DANS LA DESCRIPTION

### Documents brevets cités dans la description

- EP 1216955 A2
- US 3656913 A
- GB 1247338 A